# FASCICULE DE BREVET EUROPEEN

(11) **EP 2 825 801 B1**
(45) Date de publication et mention de la délivrance du brevet: **19.10.2016**
(21) Numéro de dépôt: 13710487.3
(22) Date de dépôt: 19.02.2013
(51) Int. Cl.: F02M 26/70, F16K 1/226, F16K 11/052, F16K 1/20

(54) **VANNE DE CIRCULATION D'UN FLUIDE**
FLÜSSIGKEITSUMLAUFVENTIL
FLUID CIRCULATION VALVE

(30) Priorité: 12.03.2012 FR 1252193
(43) Date de publication de la demande: 21.01.2015
(73) Titulaire: Valeo Systèmes de Contrôle Moteur, 95800 Cergy (FR)
(72) Inventeur: HODEBOURG, Grégory, F-Sartrouville 78500 (FR)
(74) Mandataire: Garcia, Christine
(86) Numéro de dépôt international: PCT/FR2013/050343
(87) Numéro de publication internationale: WO 2013/135985

(56) Documents cités:
- DE-A1- 2 427 995
- FR-A1- 2 933 469
- FR-A1- 2 962 182

## Description

L'invention se rapporte à une vanne de circulation d'un fluide. Ce type de vanne peut, par exemple, équiper un circuit d'alimentation en gaz d'un moteur thermique de véhicule, pour réguler le débit des gaz EGR (Exhaust Gas Recirculation) dans une boucle permettant de ponctionner une partie des gaz d'échappement en sortie de moteur, pour les réinjecter en amont dudit moteur. Le principe de fonctionnement de ce type de vanne repose sur la rotation commandée d'un volet, pouvant passer d'une position d'ouverture complète pour laisser passer le fluide, à une position de fermeture pour bloquer ce passage. L'invention a pour objet une vanne de circulation de fluide améliorée.

Une vanne de circulation de fluide possède donc un volet, qui est monté pivotant sur un axe de rotation, de sorte que ledit axe sépare le volet en une première partie et en une deuxième partie. Lorsque ce volet se retrouve dans une position de fermeture, la deuxième partie dudit volet vient au contact d'un joint, le joint assurant par ailleurs :
- l'étanchéité du corps de la vanne au niveau des première et deuxième parties du volet,
- le rôle de butée de positionnement dudit volet.

Un exemple d'une telle vanne est décrit dans le document FR2962182.

Un problème souvent rencontré avec ce type de vanne en position de fermeture totale est que la première partie du volet subit de part et d'autre un différentiel de pression, qui est du à la présence du fluide en amont du volet, alors que dans le même temps la pression exercée de chaque coté de la deuxième partie dudit volet demeure constante. Il en résulte alors une ouverture forcée de la première partie du volet sous la pression du fluide, tandis que la deuxième partie du volet demeure immobile au contact du joint. Cette ouverture intempestive permet ainsi à une fraction du fluide de passer, alors que ladite vanne est en position de fermeture, ce passage inopiné des gaz rendant ladite vanne peu fiable et altérant les performances du circuit de fluide dans lequel est implantée ladite vanne.

Une vanne de circulation de fluide selon l'invention a subi une modification structurelle par rapport à la vanne décrite dans le document FR2962182, dans le but de modifier les conditions de pression s'exerçant sur le volet, afin que ledit volet obture de façon étanche le circuit de fluide, lorsque la vanne est dans une position de fermeture. De par cet aménagement structurel, la vanne devient ainsi plus performante, plus fiable et plus sûre, au moment de fermer le circuit de fluide.

L'invention a pour objet une vanne de circulation d'un fluide, présentant un corps délimitant un conduit interne et comprenant un volet monté pivotant sur un axe séparant ledit volet en une première partie et une deuxième partie, ledit volet étant apte à pivoter entre une position d'ouverture permettant le passage du fluide dans le conduit, et une position de fermeture empêchant ledit passage, et pour laquelle la deuxième partie dudit volet vient reposer contre un joint s'étendant en regard de cette deuxième partie et assurant par ailleurs l'étanchéité du corps de la vanne. Le joint présente des moyens de dépression en aval de la deuxième partie du volet, afin d'augmenter la force de plaquage de ladite deuxième partie contre ledit joint.

L'invention a aussi pour objet une vanne de circulation d'un fluide, présentant un corps délimitant un conduit interne et comprenant un volet monté pivotant sur un axe séparant ledit volet en une première partie et une deuxième partie, ledit volet étant apte à pivoter entre une position d'ouverture permettant le passage du fluide dans le conduit, et une position de fermeture empêchant ledit passage, et pour laquelle la première et la deuxième partie dudit volet viennent reposer contre un joint s'étendant en regard de cette première et deuxième partie, ledit joint assurant par ailleurs l'étanchéité du corps de la vanne. Le joint présente des moyens de dépression en aval de la deuxième partie du volet, afin d'augmenter la force de plaquage de ladite deuxième partie contre ledit joint.

En effet, pour une vanne déjà existante, lorsque le volet est en position de fermeture, les pressions exercées de part et d'autre de la deuxième partie sont sensiblement égales, tandis que la première partie dudit volet subit une pression en amont qui est plus élevée que la pression en aval, en raison de la présence du fluide. La principale conséquence d'un tel bilan de pression est que la première partie du volet a tendance à s'ouvrir, en laissant échapper dans le conduit une fraction de fluide.

La vanne peut être une vanne de recirculation des gaz d'échappement pour un circuit d'alimentation en gaz d'un moteur thermique de véhicule automobile.

La vanne peut être une vanne disposée dans le circuit d'admission du moteur thermique, dans le circuit d'échappement du moteur thermique, ou dans une boucle de recirculation des gaz d'échappement permettant à ces derniers d'être réinjectés à l'admission du moteur thermique. Cette boucle de recirculation peut être « basse pression » ou « haute pression ».

La vanne est notamment une vanne dite « deux voies ».

En variante, la vanne peut être une vanne dite « trois voies ». La vanne peut alors être disposée à l'entrée de la boucle de recirculation, c'est-à-dire à l'endroit du circuit d'échappement où prend naissance la boucle de recirculation. La vanne dite « trois voies » peut en variante être disposée à la sortie de la boucle de recirculation, c'est-à-dire à l'endroit du circuit d'admission où les gaz d'échappement sont réinjectés à l'admission.

Les moyens de dépression comportent une ouverture pratiquée dans le joint. Cette ouverture a pour but de créer une dépression en aval de la deuxième partie du volet, pour imprimer à ladite deuxième partie un mouvement qui va s'opposer à celui de la première partie. De cette manière, la première et la deuxième partie subissent des forces de sens opposés qui vont se neutraliser mutuellement, évitant ainsi l'ouverture intempestive du volet. Le volet ne se déforme pas et assure une obturation du circuit de fluide, de façon parfaitement étanche.

L'ouverture pratiquée dans le joint est uniquement en regard de la deuxième partie du volet lorsque le volet est dans la position de fermeture.

Le joint comporte deux ouvertures, à savoir une première ouverture en regard de la première partie du volet et permettant le passage du fluide dans le conduit lorsque le volet est en position d'ouverture et une deuxième ouverture en regard de la deuxième partie du volet et permettant une dépression en aval de la deuxième partie du volet lorsque le volet est en position de fermeture et qui est alors l'ouverture décrite ci-dessus et ménagée dans les moyens de dépression.

La surface de la première ouverture peut être supérieure à celle de la deuxième ouverture.

L'ouverture pratiquée dans le joint peut être assimilable à un trou traversant ledit joint.

Avantageusement, les deux parties du volet sont planes et en continuité l'une de l'autre, le joint étant plan.

Lorsque ce volet se retrouve dans une position de fermeture, la première partie et la deuxième partie dudit volet peuvent venir chacune au contact du joint de la vanne, ledit joint agissant alors comme une butée de positionnement dudit volet.

Lorsque ce volet se retrouve dans une position de fermeture, la première partie du volet peut venir au contact du joint de la vanne par une première surface et la deuxième partie du volet peut venir au contact du joint de la vanne par une deuxième surface, la première et la deuxième surface étant des surfaces opposées du volet.

Pour une telle configuration, la surface de contact entre la première et la deuxième partie du volet et le joint peut être étalée, de façon à assurer un contact étanche entre ladite première et ladite deuxième partie du volet et la structure interne de la vanne, à savoir en particulier le joint, lorsque le volet est en position de fermeture.

De façon préférentielle, l'ouverture est pratiquée à l'intérieur du joint, sans déboucher sur l'un des bords dudit joint. De cette manière, le joint aura moins tendance à se déformer sous la pression et pourra conserver sa forme initiale. En effet, si l'ouverture débouchait sur l'un des bords du joint, les deux parties dudit joint encadrant l'ouverture pourraient s'écarter sous l'effet de la pression, et le joint serait alors rendu inopérant.

De façon avantageuse, la deuxième partie du volet et le joint sont de forme rectangulaire, l'ouverture étant de forme rectangulaire. Il s'agit d'un mode de réalisation facile à concevoir, et qui répond parfaitement au problème posé concernant l'équilibrage des pressions s'exerçant sur le volet.

Préférentiellement, le rapport de la surface de l'ouverture sur la surface totale du joint est compris entre 0.1 et 0.5. En effet, l'ouverture ne doit pas être trop importante sous peine d'entraîner une déformation du joint annulaire qui pourrait alors perdre sa fonction d'étanchéité et d'amortissement vis-à-vis du volet. De même, si l'ouverture est trop petite, elle sera sans effet sur le bilan des pressions s'exerçant sur le volet.

L'ouverture peut être en position centrale dans la partie du joint qui est en regard de la deuxième partie du volet lorsque celui-ci est en position de fermeture.

Avantageusement, le joint présente un évidement, et l'ouverture est pratiquée dans ledit évidement. Cet évidement est assimilable à une nervure, et le fait que l'ouverture soit pratiquée au sein de cet évidement va augmenter la surface de dépression ainsi créée par ladite ouverture, et va contribuer à assurer une fermeture particulièrement étanche du volet.

De façon préférentielle, la deuxième partie du volet pivote le long d'une paroi de la structure interne de la vanne, lorsque ledit volet se déplace en rotation, ladite paroi étant conçue pour laisser subsister un jeu J avec ladite deuxième partie, qui est inférieur ou égal à 1.5mm. Habituellement, sur les vannes déjà existantes, ce jeu est important puisqu'il est de l'ordre de 4mm. Avec un tel jeu, lorsque le volet est dans une position de faible ouverture, correspondant à une position voisine de la position de fermeture, les gaz peuvent facilement passer par ce jeu important, et annihiler l'effet de dépression créé par l'ouverture pratiquée dans le joint, car la pression va vite s'équilibrer de chaque coté de la deuxième partie du volet en raison du passage des gaz par ledit jeu. Ainsi, afin de maintenir cet effet de dépression engendré par l'ouverture du joint pour des petites ouvertures du volet, une solution consiste à minimiser le jeu demeurant entre la deuxième partie du volet et la paroi de la structure interne de la vanne, le long de laquelle va se déplacer en rotation ladite deuxième partie. Il est à noter que la présence d'un jeu est indispensable pour éviter l'étouffement du moteur, lorsque le volet se retrouve dans une position de pleine ouverture.

De façon avantageuse, le jeu est compris entre 0.1mm et 1.5mm.

Préférentiellement, le jeu est compris entre 0.2mm et 0.6mm.

Les vannes selon l'invention présentent l'avantage d'être performantes en matière d'étanchéité, non pas au moyen de l'ajout d'une pièce, mais par un enlèvement judicieux de matière dans la structure interne desdites vannes, ne pénalisant pas le fonctionnement de celles-ci. Il en résulte que ces vannes possèdent une fonctionnalité supplémentaire à travers cette étanchéité accrue, tout en demeurant d'un encombrement constant. Les vannes selon l'invention ont l'avantage de présenter une certaine modularité, car l'ouverture pratiquée dans le joint peut adopter une taille et une géométrie appropriées, de façon à s'adapter à une configuration particulière de vanne ou aux caractéristiques spécifiques du circuit de fluide sur lequel elles sont implantées. Elles présentent enfin l'avantage d'être d'un coût réduit, car elles ne nécessitent aucune pièce supplémentaire, ni un usinage complexe.

On donne ci-après, une description détaillée d'un mode de réalisation préféré d'une vanne selon l'invention, en se référant aux dessins annexés sur lesquels :
- La figure 1 est une vue schématisée de la structure interne d'une vanne de circulation de fluide selon l'état de la technique, le volet étant dans une position de fermeture,
- La figure 2 est une vue schématisée de la structure interne d'une vanne de circulation de fluide selon l'invention, le volet étant dans une position de fermeture,
- La figure 3 est une vue en perspective d'un joint mis en oeuvre dans une vanne selon l'invention,
- La figure 4 est une vue en perspective partielle d'une vanne selon l'invention, le volet étant dans une position d'ouverture,
- La figure 5 est une vue de côté de la structure interne d'une vanne de circulation de fluide selon l'invention, le volet étant dans une position de faible ouverture,

Un circuit de gaz d'un moteur thermique de véhicule automobile comprend une partie amont d'alimentation en gaz dudit moteur, dans laquelle circule notamment de l'air frais, et une partie aval d'échappement dans laquelle circulent des gaz brûlés pour être évacués hors du véhicule. Généralement, un tel circuit de gaz comprend au moins une boucle EGR (Exhaust Gas Recirculation) joignant la partie aval d'échappement à la partie amont d'alimentation, pour permettre de mélanger des gaz d'échappement à l'air frais incident. Puisque ces boucles EGR ne doivent pas être ouvertes en permanence lors de toutes les phases de fonctionnement du moteur, elles sont équipées chacune d'une vanne EGR permettant de réguler le flux des gaz d'échappement circulant dans la boucle considérée.

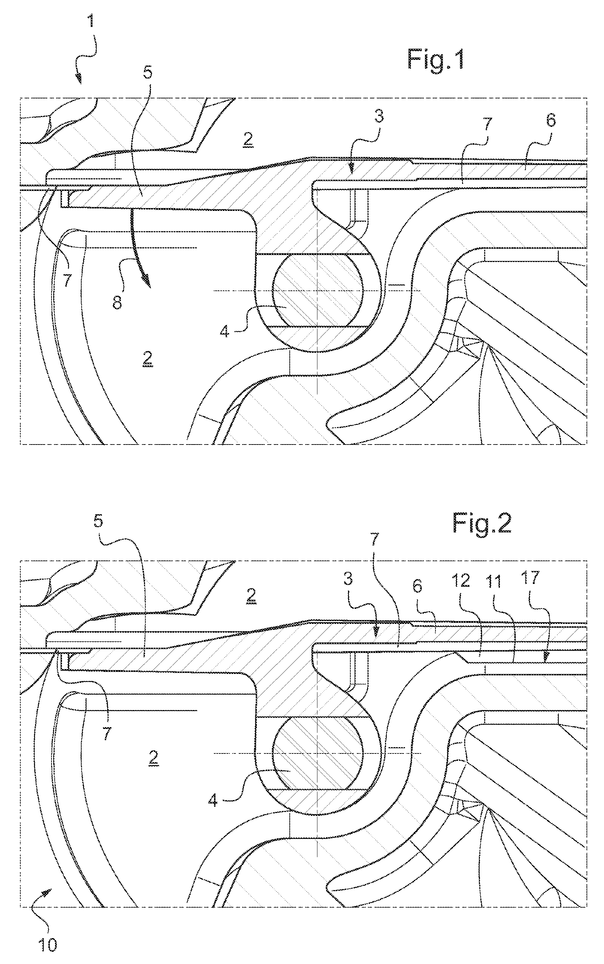

En se référant à la figure 1, une vanne EGR de l'état de la technique comprend un conduit 2 de circulation de gaz et un volet 3, monté pivotant sur un axe 4 de rotation, et apte à se déplacer entre une position de fermeture pour laquelle il empêche le passage des gaz d'échappement, et une position d'ouverture pour laquelle il autorise ce passage. Le volet 3 est monté sur l'axe 4, de sorte que ledit axe 4 sépare ledit volet 3 en une première partie 5 et une deuxième partie 6. Lesdites parties 5,6 sont planes et de faible épaisseur, et sont situées en continuité l'une de l'autre. Préférentiellement, elles constituent une seule et même pièce. Ces deux parties 5,6 ont une largeur identique, ladite largeur constituant leur dimension prise selon l'axe de rotation 4, tandis que la première partie 5 possède une longueur inférieure à celle de la deuxième partie 6, la longueur représentant leur dimension prise suivant un axe perpendiculaire audit axe 4 de rotation. La première 5 et la deuxième 6 parties sont reliées rigidement entre elles, si bien qu'elles pivotent simultanément autour de l'axe 4 en étant situées à 180° l'une de l'autre. La structure interne de la vanne 1 est configurée de manière à ce que la première partie 5 et la deuxième partie 6 du volet 3 viennent en appui contre un joint 7 solidaire de ladite structure interne lorsque ledit volet 3 se retrouve en position de fermeture. L'agencement du volet 3 dans la vanne 1 est tel que la première partie 5 du volet gère plutôt l'entrée des gaz, et la deuxième partie 6 dudit volet 3 gère plutôt la sortie desdits gaz. Ainsi, lorsque le volet 3 occupe une position de fermeture, les pressions exercées de par et d'autre de la deuxième partie 6 sont identiques, ladite deuxième se retrouvant alors dans une situation d'équilibre, tandis que les gaz présents dans le conduit 2, en amont du volet 3, exercent une pression importante sur la première partie 5 dudit volet 3. Il en résulte un différentiel de pression de part et d'autre de ladite première partie 5, qui a tendance alors à s'ouvrir dans le sens indiqué par la flèche 8 et à laisser passer du gaz. Une telle vanne 1 est peu étanche, et rend le fonctionnement de la boucle EGR, aléatoire et peu sûr.

En se référant à la figure 2, une vanne 10 selon l'invention a subi un premier aménagement par rapport aux vannes 1 déjà existantes, pour empêcher la première partie 5 du volet 3 de s'ouvrir sous la pression des gaz, lorsque le volet 3 occupe une position de fermeture. Cet aménagement porte sur la partie 17 du joint 7 contre laquelle vient en appui la deuxième partie 6 du volet 3 en position de fermeture.

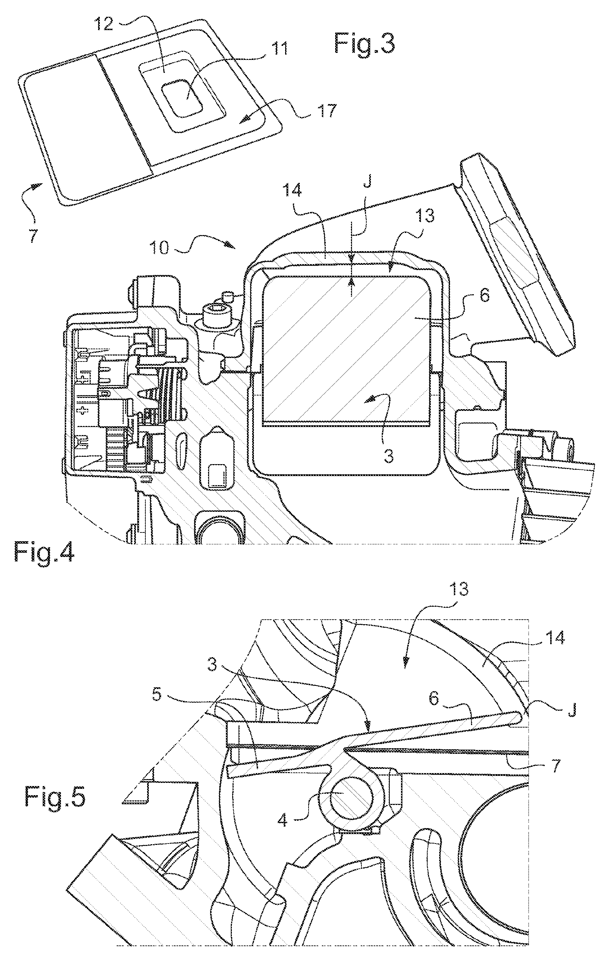

En se référant à la figure 3, ce premier aménagement consiste à pratiquer un trou 11 dans ladite partie 17 du joint 7, afin de créer une dépression en aval de la deuxième partie 6 du volet 3. Cette partie 17 du joint 7 est plane et de faible épaisseur, et a sensiblement une forme rectangulaire. Elle présente un évidement central 12 de forme rectangulaire s'étendant parallèlement à la partie 17 du joint 7, ledit évidement 12 étant assimilable à une nervure. Le trou 11 a également une forme rectangulaire et s'étend parallèlement à la nervure 12 et à la partie 17 du joint 7. Il est pratiqué au fond de cette nervure 12, en position centrale. Lorsque le volet 3 occupe une position de fermeture, sa deuxième partie 6 vient en appui contre ladite partie 17 du joint 7, de sorte que la nervure 12 émerge de la partie 17 du joint 7, sur la face opposée à celle contre laquelle vient en contact ladite deuxième partie 6 du volet 3. De cette manière, le trou 11 pratiqué dans ladite partie 17 du joint 7 crée une dépression en aval de la deuxième partie 6 du volet 3, ladite deuxième partie 6 ayant alors tendance à venir se plaquer étroitement contre ladite partie 17 du joint 7. Ce mouvement a tendance à s'opposer à celui de la première partie 5 du volet 3, si bien qu'en finalité, ledit volet 3 conserve un profil rectiligne, permettant d'assurer une fermeture de la vanne 10 parfaitement étanche, sans fuite intempestive de gaz.

En se référant aux figures 4 et 5, une vanne selon l'invention peut présenter un deuxième aménagement afin d'étendre l'efficacité du joint 7 troué, aux petites ouvertures du volet 3, correspondant à des positions voisines de la position de fermeture. Actuellement, la deuxième partie 6 du volet 3 pivote dans un conduit 13 de la structure interne de la vanne 1, lorsque le volet 3 passe d'une position d'ouverture à une position de fermeture, ou inversement, ce pivotement s'effectuant en laissant subsister un jeu J important entre la paroi 14 dudit conduit 13 et ladite deuxième partie 6 du volet 3. Le jeu J entre la deuxième partie 6 du volet 3 et la paroi 14 du conduit 13 est traditionnellement d'environ 4mm. Bien que ce jeu J soit nécessaire, pour éviter l'étouffement du moteur lorsque le volet 3 se retrouve en position d'ouverture, il entraine un passage d'air important, lorsque ledit volet 3 est notamment en position de faible ouverture, annulant ainsi la dépression créée par le trou 11 du joint 7. L'équilibre des pressions se fait alors à nouveau autour de la deuxième partie 6 du volet, qui ne peut alors plus empêcher la première partie 5 de se déformer sous l'effet du différentiel de pression provoqué par les gaz en amont de ladite première partie 5. Le volet 3 en position de faible ouverture laisse alors passer un débit de gaz anormalement élevé au niveau de sa première partie 5 qui se déforme. Ce deuxième aménagement consiste donc à limiter significativement le jeu J entre le pourtour de la deuxième partie 6 du volet 3 et la paroi 14 du conduit 13 dans lequel se déplace ladite deuxième partie 6. Plus précisément, la réduction du jeu J va être obtenue par une modification du conduit 13, dont l'ouverture va être diminuée, afin que la paroi 14 interne dudit conduit 13 se rapproche du contour de la deuxième partie 6 du volet 3. De cette manière, le jeu J initialement de 4 mm, va être réduit pour prendre une valeur inférieure ou égale à 1,5mm. Préférentiellement, ce jeu J va être compris entre 0.1mm et 1.5mm, et, plus précisément, a être compris entre 0.2mm et 0.6mm. Avec un tel jeu J réduit, le volet 3 en position de faible ouverture va restreindre le passage des gaz entre sa deuxième partie 6 et la paroi interne 14 du conduit 13, maintenant le joint 7 troué pleinement efficace. Ainsi, en position de faible ouverture, la deuxième partie 6 du volet 3 va subir un effort du à la dépression créée par le joint 7 troué, cette déformation contrecarrant celle de la première partie 5 dudit volet 3, contribuant à maintenir le volet 3 globalement indéformé et donc apte à assurer efficacement ses différentes fonctions au sein de la vanne 10.

## Revendications

1. Vanne (10) de circulation d'un fluide, présentant un corps délimitant un conduit (2) interne et comprenant un volet (3) monté pivotant sur un axe (4) séparant ledit volet (3) en une première partie (5) et une deuxième partie (6), ledit volet (3) étant apte à pivoter entre une position d'ouverture permettant le passage du fluide dans le conduit (2), et une position de fermeture empêchant ledit passage, et pour laquelle la première partie (5) et la deuxième partie (6) dudit volet (3) viennent reposer contre un joint (7) s'étendant en regard de cette première (5) et deuxième (6) partie, ledit joint (7) assurant par ailleurs l'étanchéité du corps de la vanne (10), **caractérisée en ce que** ledit joint (7) présente des moyens (11,12) de dépression en aval de la deuxième partie (6) du volet (3), afin d'augmenter la force de plaquage de ladite deuxième partie (6) contre ledit joint (7), **en ce que** le joint (7) comporte deux ouvertures, une première ouverture en regard de la première parties (5) du volet (3) et permettant le passage du fluide dans le conduit lorsque le volet est en position d'ouverture et une deuxième ouverture (11) en regard de la deuxième partie (6) du volet et permettant une dépression en aval de la deuxième partie (6) fermeture, et **en ce que** les du volet lorsque le volet est en position de fermeture, et **en ce que** les moyens de dépression comportent la deuxième ouverture (11) pratiquée dans le joint (7) uniquement en regard de la deuxième partie (6) du volet (3) lorsque le volet (3) est en position de fermeture.

2. Vanne (10) selon la revendication 1, **caractérisée en ce que** les deux parties (5,6) du volet (3) sont planes et en continuité l'une de l'autre, et **en ce que** le joint (7) est plan.

3. Vanne (10) selon la revendication 1 ou 2, **caractérisée en ce que** l'ouverture (11) est pratiquée à l'intérieur du joint (7) sans déboucher sur l'un des bords dudit joint (7).

4. Vanne (10) selon l'une quelconque des revendications 1 à 3, **caractérisée en ce que** la deuxième partie (6) du volet (3) et le joint (7) sont de forme rectangulaire, et **en ce que** l'ouverture (11) est de forme rectangulaire.

5. Vanne (10) selon l'une quelconque des revendications 1 à 4, **caractérisée en ce que** le rapport de la surface de l'ouverture (11) sur la surface totale du joint (7) est compris entre 0.1 et 0.5.

6. Vanne (10) selon l'une quelconque des revendications 1 à 5, **caractérisée en ce que** l'ouverture (11) est en position centrale dans la partie (17) du joint (7) qui est en regard de la deuxième partie (6) du volet (3) lorsque celui-ci est en position de fermeture.

7. Vanne (10) selon l'une quelconque des revendications 3 à 6, **caractérisée en ce que** le joint (7) présente un évidement (12), et **en ce que** l'ouverture (11) est pratiquée dans ledit évidement (12).

8. Vanne (10) selon l'une quelconque des revendications 1 à 7, **caractérisée en ce que** la deuxième partie (6) du volet (3) pivote le long d'une paroi (14) de la structure interne de la vanne, lorsque ledit volet (3) se déplace en rotation, et **en ce que** ladite paroi (14) est conçue pour laisser subsister un jeu J avec ladite deuxième partie (6) qui est inférieur ou égal à 1.5mm.

9. Vanne (10) selon la revendication 8, **caractérisé en ce que** le jeu J est compris entre 0.1mm et 1.5 mm.

10. Vanne (10) selon la revendication 9, **caractérisée en ce que** le jeu J est compris entre 0.2mm et 0.6mm.

## Patentansprüche

1. Flüssigkeitsumlaufventil (10), das einen Körper aufweist, der eine innere Leitung (2) begrenzt und eine Klappe (3) aufweist, die schwenkbar auf einer Achse (4) befestigt ist, die die Klappe (3) in einen ersten Teil (5) und einen zweiten Teil (6) trennt, wobei die Klappe (3) geeignet ist, zwischen einer Öffnungsposition, die den Durchgang der Flüssigkeit in der Leitung (2) ermöglicht, und einer Schließposition, die den Durchgang verhindert, zu schwenken, und für die der erste Teil (5) und der zweite Teil (6) der Klappe (3) gegen eine Dichtung (7) zu liegen kommen, die sich gegenüber diesem ersten (5) und zweiten (6) Teil erstreckt, wobei die Dichtung (7) außerdem die Dichtigkeit des Körpers des Ventils (10) gewährleistet, **dadurch gekennzeichnet, dass** die Dichtung (7) Unterdruckmittel (11, 12) nachgelagert nach dem zweiten Teil (6) der Klappe (3) aufweist, um die Presskraft des zweiten Teils (6) gegen die Dichtung (7) zu erhöhen, dass die Dichtung (7) zwei Öffnungen aufweist, eine erste Öffnung, die dem ersten Teil (5) der Klappe (3) gegenüberliegt und die den Durchgang der Flüssigkeit in der Leitung ermöglicht, wenn die Klappe in Öffnungsposition ist, und eine zweite Öffnung (11), die dem zweiten Teil (6) der Klappe gegenüberliegt und einen Unterdruck nachgelagert nach dem zweiten Teil (6) der Klappe ermöglicht, wenn die Klappe in Schließposition ist, und dass die Unterdruckmittel die zweite Öffnung (11) aufweisen, die in der Dichtung (7) nur gegenüber dem zweiten Teil (6) der Klappe (3) ausgebildet ist, wenn die Klappe (3) in Schließposition ist.

2. Ventil (10) nach Anspruch 1, **dadurch gekennzeichnet, dass** die zwei Teile (5, 6) der Klappe (3) eben und in Kontinuität voneinander sind und dass die Dichtung (7) eben ist.

3. Ventil (10) nach Anspruch 1 oder 2, **dadurch gekennzeichnet, dass** die Öffnung (11) im Inneren der Dichtung (7) ausgebildet ist, ohne an einem der Ränder der Dichtung (7) zu münden.

4. Ventil (10) nach einem der Ansprüche 1 bis 3, **dadurch gekennzeichnet, dass** der zweite Teil (6) der Klappe (3) und die Dichtung (7) von rechteckiger Form sind und dass die Öffnung (11) von rechteckiger Form ist.

5. Ventil (10) nach einem der Ansprüche 1 bis 4, **dadurch gekennzeichnet, dass** das Verhältnis der Fläche der Öffnung (11) zur Gesamtfläche der Dichtung (7) zwischen 0,1 und 0,5 beträgt.

6. Ventil (10) nach einem der Ansprüche 1 bis 5, **dadurch gekennzeichnet, dass** die Öffnung (11) in mittlerer Position in dem Teil (17) der Dichtung (7) ist, der dem zweiten Teil (6) der Klappe (3) gegenüberliegt, wenn diese in Schließposition ist.

7. Ventil (10) nach einem der Ansprüche 3 bis 6, **dadurch gekennzeichnet, dass** die Dichtung (7) eine Ausnehmung (12) aufweist, und dass die Öffnung (11) in der Ausnehmung (12) ausgebildet ist.

8. Ventil (10) nach einem der Ansprüche 1 bis 7, **dadurch gekennzeichnet, dass** der zweite Teil (6) der Klappe (3) entlang einer Wand (14) der inneren Struktur des Ventils schwenkt, wenn sich die Klappe (3) in Drehung bewegt, und dass die Wand (14) ausgelegt ist, um ein Spiel J mit dem zweiten Teil (6) zu lassen, das niedriger als oder gleich 1,5 mm ist.

9. Ventil (10) nach Anspruch 8, **dadurch gekennzeichnet, dass** das Spiel J zwischen 0,1 mm und 1,5 mm beträgt.

10. Ventil (10) nach Anspruch 9, **dadurch gekennzeichnet, dass** das Spiel J zwischen 0,2 mm und 0,6 mm beträgt.

## Claims

1. Fluid circulation valve (10), having a body delimiting an internal duct (2) and comprising a flap (3) mounted pivotably on a spindle (4) separating said flap (3) into a first part (5) and a second part (6), said flap (3) being able to pivot between an open position allowing the fluid to pass into the duct (2), and a closed position which prevents said passage and for which the first part (5) and the second part (6) of said flap (3) come to rest against a seal (7) which extends facing this first (5) and second (6) part, said seal (7) further sealing the body of the valve (10), **characterized in that** said seal (7) has pressure-lowering means (11, 12) downstream of the second part (6) of the flap (3) so as to increase the force for clamping said second part (6) against said seal (7), **in that** the seal (7) comprises two openings, a first opening facing the first part (5) of the flap (3) and allowing the fluid to pass into the duct when the flap is in an open position, and a second opening (11) facing the second part (6) of the flap and allowing a pressure drop downstream of the second part (6) of the flap when the flap is in a closed position, and **in that** the pressure-lowering means comprise the second opening (11) created in the seal (7), only facing the second part (6) of the flap (3) when the flap (3) is in a closed position.

2. Valve (10) according to Claim 1, **characterized in that** the two parts (5, 6) of the flap (3) are planar and mutually continuous, and **in that** the seal (7) is planar.

3. Valve (10) according to Claim 1 or 2, **characterized in that** the opening (11) is created within the seal (7) without opening onto one of the edges of said seal (7).

4. Valve (10) according to any one of Claims 1 to 3, **characterized in that** the second part (6) of the flap (3) and the seal (7) are rectangular in shape, and **in that** the opening (11) is rectangular in shape.

5. Valve (10) according to any one of Claims 1 to 4, **characterized in that** the ratio of the surface area of the opening (11) to the total surface area of the seal (7) is between 0.1 and 0.5.

6. Valve (10) according to any one of Claims 1 to 5, **characterized in that** the opening (11) is in a central position in the part (17) of the seal (7) which faces the second part (6) of the flap (3) when the latter is in the closed position.

7. Valve (10) according to any one of Claims 3 to 6, **characterized in that** the seal (7) has a cavity (12) and **in that** the opening (11) is created in said cavity (12).

8. Valve (10) according to any one of Claims 1 to 7, **characterized in that** the second part (6) of the flap (3) pivots along a wall (14) of the internal structure of the valve when said flap (3) moves in rotation, and **in that** said wall (14) is designed to leave a clearance J, with respect to said second part (6), which is less than or equal to 1.5 mm.

9. Valve (10) according to Claim 8, **characterized in that** the clearance J is between 0.1 mm and 1.5 mm.

10. Valve (10) according to Claim 9, **characterized in that** the clearance J is between 0.2 mm and 0.6 mm.
